**Europäisches Patentamt**

**European Patent Office**

**Office européen des brevets**

(11) Veröffentlichungsnummer : **0 382 678 B1**

(12)
# EUROPÄISCHE PATENTSCHRIFT

(45) Veröffentlichungstag der Patentschrift :
**25.11.92 Patentblatt 92/48**

(51) Int. Cl.⁵ : **B23B 51/00**

(21) Anmeldenummer : **90810056.3**

(22) Anmeldetag : **24.01.90**

(54) **Bohrvorrichtung für Hinterschnitt.**

(30) Priorität : **10.02.89 DE 3903889**

(43) Veröffentlichungstag der Anmeldung :
**16.08.90 Patentblatt 90/33**

(45) Bekanntmachung des Hinweises auf die
Patenterteilung :
**25.11.92 Patentblatt 92/48**

(84) Benannte Vertragsstaaten :
**AT CH DE ES FR GB IT LI SE**

(56) Entgegenhaltungen :
**EP-A- 0 231 720**

(73) Patentinhaber : **HILTI Aktiengesellschaft
FL-9494 Schaan (LI)**

(72) Erfinder : **Mark, Fritz
Rheinstrasse 27b
A-6841 Mäder (AT)**

(74) Vertreter : **Wildi, Roland
Hilti Aktiengesellschaft Patentabteilung
FL-9494 Schaan (LI)**

## Beschreibung

Die Erfindung betrifft eine Bohrvorrichtung zum Erstellen hinterschnittener Bohrungen in einem Untergrund, mit einem sich auf dem Untergrund abstützenden Gehäuse, in welchem eine mit einer exzentrisch angeordneten, achsparallel verlaufenden Bohrung versehene Führungshülse angeordnet ist, mit einer in der Bohrung um einen Winkel von etwa 180° begrenzt drehbar gelagerten Exzenterbüchse und einer in der Exzenterbüchse drehbar gelagerten Antriebswelle mit einem Schneidkopf.

Bohrungen mit Hinterschnitt werden hauptsächlich zur Aufnahme entsprechend ausgebildeter, formschlüssig verankerbarer Dübel hergestellt. Die Herstellung einer Bohrung mit Hinterschnitt ist jedoch nach den bisher bekannten Verfahren und Vorrichtungen sehr aufwendig.

Aus der EP-A 0 231 720 ist ein in seiner Handhabung recht aufwendiges Werkzeug zum Herstellen hinterschnittener Bohrungen bekannt. Bei dieser Vorrichtung wird die in der Führungshülse exzentrisch gelagerte Exzenterbüchse mittels eines Schneckengetriebes verdreht. Die in der Exzenterbüchse drehbar gelagerte Antriebswelle mit dem Schneidkopf am vorderen Ende wird durch dieses Verdrehen in eine exzentrische Lage gebracht. Der Schneidkopf sticht dabei in die Wandung des Bohrloches ein. Anschliessend wird die Führungshülse samt der Exzenterbüchse und der darin drehbar gelagerten Antriebswelle um 360° verdreht und dabei in der Bohrlochwandung ein umlaufender Hinterschnitt geschaffen. Hierauf muss die Exzenterbüchse wiederum um 180° zurückverdreht werden, damit der Schneidkopf in eine zentrische Lage gelangt und die Bohrvorrichtung aus dem Bohrloch entnommen werden kann.

Der Erfindung liegt die Aufgabe zugrunde, eine Vorrichtung zum Erstellen hinterschnittener Bohrungen in einem Untergrund zu schaffen, welche eine einfache Bedienungsweise ermöglicht.

Gemäss der Erfindung wird dies dadurch erreicht, dass die Führungshülse im Gehäuse drehbar angeordnet ist, wobei zwischen der Führungshülse und der über ein Untersetzungsgetriebe mit der Antriebswelle verbundenen Exzenterbüchse eine bei gegenseitiger Relativverdrehung von Führungshülse und Exzenterbüchse spannbare Torsionsfeder angeordnet und zwischen der Führungshülse und Gehäuse eine lösbare Einrichtung zur Dreharretierung vorgesehen ist.

Zu Beginn der Herstellung eines Hinterschnitts wird die Exzenterbüchse gegenüber der Führungshülse verdreht und dabei die Torsionsfeder gespannt. Die lösbare Einrichtung zur Dreharretierung der Führungehülse verhindert dabei ein Mitdrehen der Führungshülse und gewährleistet, dass eine Relativverdrehung zwischen Exzenterbüchse und Führungshülse zustandekommt. Wenn der Einstechvorgang abgeschlossen ist, dh wenn die Torsionsfeder maximal vorgespannt ist, wird die Einrichtung zur Dreharretierung der Führungshülse gelöst und die Führungshülse unter Bildung eines Hinterschnittes um 360° verdreht. Die Torsionsfeder kann sich jedoch erst wieder entspannen, wenn der gesamte Hinterschnitt gefertigt ist.

Die Einrichtung zur Dreharretierung weist zweckmässigerweise eine mit Angriffsnocken der Führungshülse zusammenwirkende Klinke auf. Eine solche Klinke kann in unterschiedlicher Drehstellung mit den Angriffsnocken in Eingriff gebracht werden. Die Dreharretierung der Führungshülse ist daher in beliebiger Drehstellung möglich.

Vorzugsweise sind die Angriffsnocken sägezahnförmig ausgebildet, da die Dreharretierung der Führungshülse nur in einer Drehrichtung erforderlich ist. Die Klinke kann somit in der einen Drehrichtung über die Angriffsnocken hinweg gleiten.

Die Einrichtung zur Dreharretierung der Führungshülse muss nur wirksam sein, bis der Schneidkopf die volle Tiefe erreicht hat. Für ein Lösen der Einrichtung zur Dreharretierung ist es daher zweckmässig, dass die Klinke an einem Kniegelenkhebel abgestützt ist. Ein Kniegelenkhebel weist neben der gestreckten instabilen Lage zwei beidseits der gestreckten Lage liegende stabile Stellungen auf. Ein Kniegelenkhebel kann mittels relativ geringem Kraftaufwand von der einen in die andere stabile Stellung gebracht werden.

Die Exzenterbüchse steht über ein Untersetzungsgetriebe mit der Antriebswelle in Verbindung. Durch das Untersetzungsgetriebe wird die Exzenterbüchse direkt von der Antriebswelle angetrieben. Zusätzliche Angriffsmittel wie Kurbeln, Handräder oder dergleichen können somit entfallen. Dies ermöglicht auch eine sehr kompakte Bauweise. Durch die feste Kupplung der Exzenterbüchse mit der Antriebswelle wird stets ein bestimmtes Untersetzungsverhältnis eingehalten, so dass die Anzahl der Umdrehungen der Exzenterbüchse zu den Umdrehungen der Antriebswelle in einem festen Verhältnis steht. Dadurch können optimale Schnittwerte gewährleistet werden.

Das Untersetzungsgetriebe ist zweckmässigerweise als Exzentergetriebe ausgebildet, welches eine sehr kompakte Bauweise und grosse Uebersetzungsverhältnisse ermöglicht.

Der Steg, dasjenige Teil des Exzentergetriebes, welches am schnellsten rotiert, ist vorteilhaft mit der Antriebswelle verbunden. Auf dem Steg des Exzentergetriebes ist dann ein aus zwei Zahnrädern bestehender Block frei drehbar gelagert. Das eine Zahnrad steht im Eingriff mit einem feststehenden Hohlrad und das andere Zahnrad steht im Eingriff mit einem drehbar gelagerten Hohlrad. Das drehbar gelagerte Hohlrad ist mit der Exzenterbüchse verbunden. Je nach gewählten Zähnezahlen kann das Drehzahlverhältnis des Steges zum drehbar gelagerten Hohlrad etwa 1:600 betragen.

Das Uebersetzungsgetriebe weist zweckmässigerweise ein Getriebegehäuse auf, das mit dem Gehäuse über ein Führungskreuz drehfest und in einer senkrecht zur Antriebswelle verlaufenden Ebene verschiebbar verbunden ist. Das Führungskreuz verhindert also ein Mitdrehen des Getriebegehäuses und ermöglicht gleichzeitig eine kreisförmige Bewegung des Getriebegehäuses gegenüber dem Gehäuse.

Die Erfindung soll nachstehend, anhand der sie beispielsweise wiedergebenden Zeichnungen, näher erläutert werden. Es zeigen:

Fig. 1 eine erfindungsgemässe Bohrvorrichtung, im Längsschnitt;

Fig. 2 einen Querschnitt durch die in Fig. 1 dargestellte Bohrvorrichtung, entlang der Linie II-II;

Fig. 3 einen Querschnitt durch die in Fig. 1 dargestellte Bohrvorrichtung, entlang der Linie III-III;

Fig. 4 einen Querschnitt durch die in Fig. 1 dargestellte Bohrvorrichtung, entlang der Linie IV-IV.

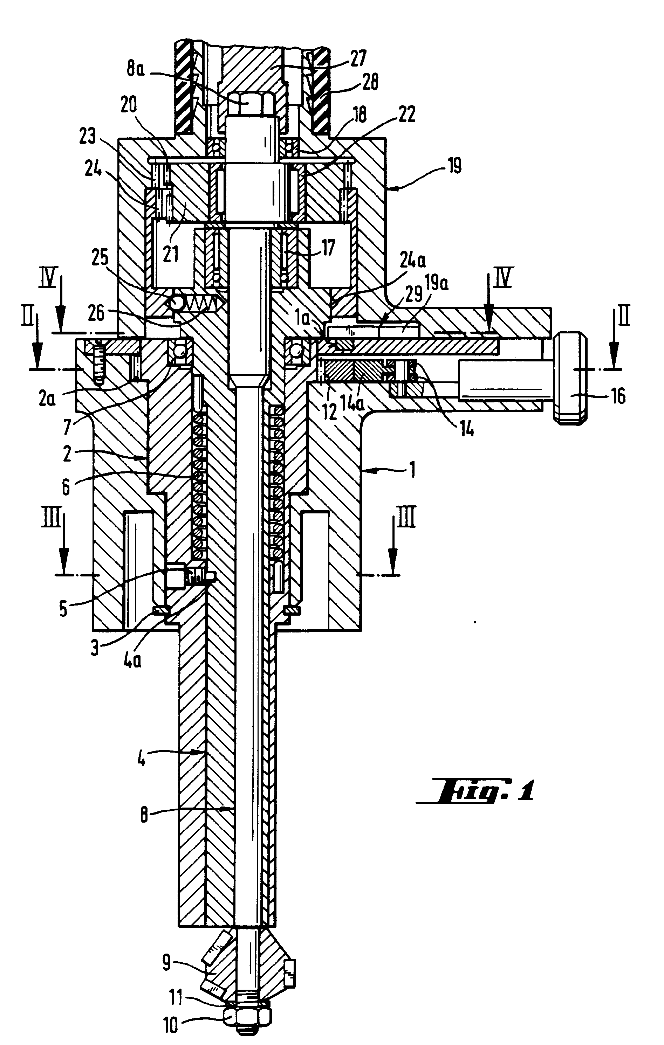

Die erfindungsgemässe Bohrvorrichtung weist ein Gehäuse 1 und eine darin drehbar gelagerte Führungshülse 2 auf. Die Führungshülse 2 ist mittels eines Sicherungsringes 3 in axialer Richtung im Gehäuse 1 gesichert. In einer exzentrisch angeordneten Bohrung der Führungshülse 2 ist eine Exzenterbüchse 4 drehbar gelagert. Die Verdrehbarkeit der Exzenterbüchse 4 gegenüber der Führungshülse 2 wird durch eine sich über einen Teil des Umfanges erstreckende Ringnut 4a und einen darin eingreifenden, in die Führungshülse 2 eingeschraubten Gewindestift 5 begrenzt. Zwischen der Führungshülse 2 und der Exzenterbüchse 4 befindet sich eine sich an beiden Teilen abstützende Torsionsfeder 6. Die Torsionsfeder 6 wird bei Relativverdrehung der Exzenterbüchse 4 gegenüber der Führungshülse 2 gespannt. Die Exzenterbüchse 4 ist über ein Wälzlager 7 in der Führungshülse 2 abgestützt. In einer exzentrischen Bohrung der Exzenterbüchse 4 ist eine Antriebswelle 8 drehbar gelagert. Das vordere, die Führungshülse 2 und die Exzenterbüchse 4 überragende Ende der Antriebswelle 8 ist mit einem Schneidkopf 9 verbunden. In der in Fig. 1 dargestellten Stellung summieren sich die Exzentrizitäten der Führungshülse 2 und der Exzenterbüchse 4, so dass der Schneidkopf 9 die Aussenkontur der Führungshülse 2 überragt. In dieser Stellung wird in bekannter Weise in einem Untergrund ein Hinterschnitt erzeugt. Wird die Exzenterbüchse 4 um 180° geschwenkt, so heben sich die Exzentrizitäten auf. Der Schneidkopf 9 kommt dabei gegenüber der Führungshülse 2 in eine zentrische Lage, so dass die Bohrvorrichtung in ein Bohrloch eingeführt, bzw aus diesem wieder entnommen werden kann. Der Schneidkopf 9 ist mittels einer Mutter 10 sowie einer Unterlagsscheibe 11 auf der Antriebswelle 8 befestigt.

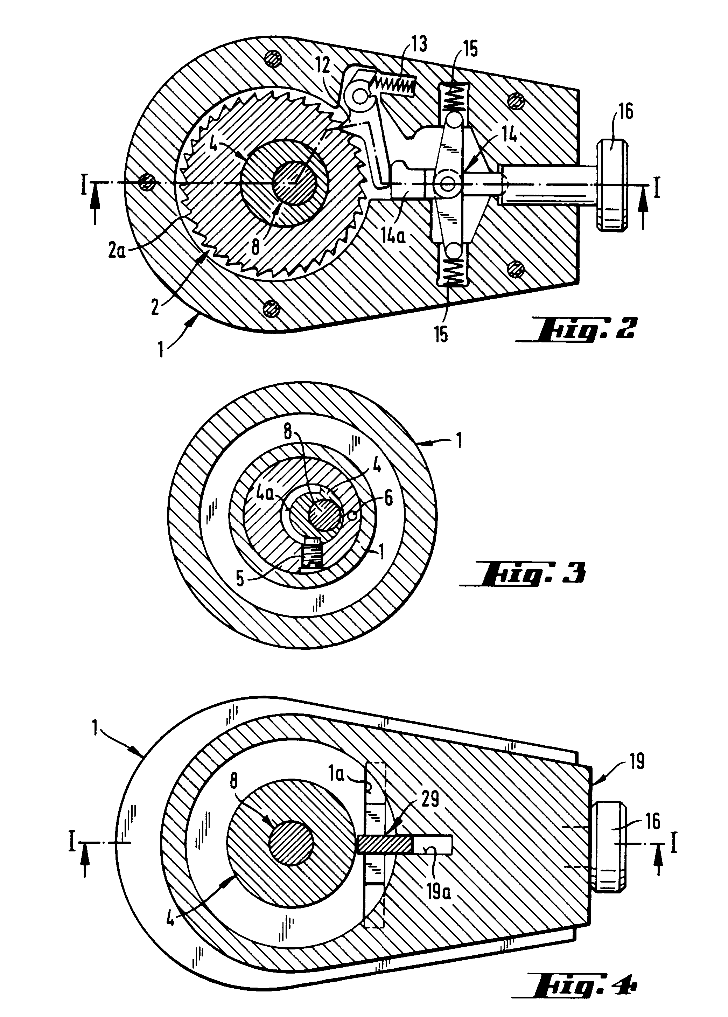

Wie Fig. 2 zeigt, ist die Führungshülse 2 in ihrem rückwärtigen Bereich mit einer Verzahnung 2a versehen. Eine drehbar gelagerte Klinke 12 steht mit der Verzahnung 2a im Eingriff. Der eine Arm der Klinke 12 ist über eine Feder 13 abgestützt. Der andere Arm der Klinke 12 stützt sich über ein Zwischenstück 14a an einem Kniehebelgelenk 14 ab. Die freien Enden des Kniehebelgelenks 14 werden durch Druckfedern 15 beaufschlagt. In der in Fig. 2 dargestellten Stellung drückt der Kniegelenkhebel 14 die Klinke 12 in Eingriff mit der Verzahnung 2a. Wird der Druck der Verzahnung 2a jedoch zu gross, so rastet das Kniehebelgelenk 14 über die gestreckte Stellung auf die gegenüberliegende Seite und schiebt dabei einen Knopf 16 nach aussen. Die Führungshülse 2 ist somit nicht mehr blockiert und kann sich zusammen mit der Exzenterbüchse 4 verdrehen. Dies ist für die Erstellung eines Hinterschnittes erforderlich.

Die Antriebswelle 8 ist über ein kombiniertes Nadel-/Kugellager 17 in der Exzenterbüchse 4 gelagert. Eine weitere Lagerung der Antriebswelle 8 erfolgt über ein Kugellager 18 in einem Getriebegehäuse 19. Auf einem exzentrischen Teil der Antriebswelle 8 ist ein aus zwei Zahnrädern 20, 21 bestehender Block über ein Nadellager 22 drehbar gelagert.

Das Zahnrad 20 steht im Eingriff mit einem Hohlrad 23 an der Innenseite des Getriebegehäuses 19. Das Zahnrad 21 steht im Eingriff mit einem Hohlrad 24, das im Getriebegehäuse 19 drehbar gelagert ist und ist über eine aus einer Kugel 25, einer Feder 26 und Rastöffnungen 24a bestehenden Ueberlastkupplung mit der Exzenterbüchse 4 verbunden. Die Zahnräder 20, 21 sowie die Hohlräder 23, 24 bilden ein sogenanntes Exzentergetriebe. Dieses Exzentergetriebe weist bei den geringen Durchmesserunterschieden zwischen den einzelnen Zahnrädern ein sehr hohes Uebersetzungsverhältnis auf. Im vorliegenden Fall beträgt dieses Uebersetzungsverhältnis etwa 1:600. Das rückwärtige Ende der Antriebswelle 8 ist mit einem Sechskant 8a versehen. Eine flexible Welle 27 ist mit dem Sechskant 8a verbunden und dient der Einleitung der Drehbewegung. Die flexible Welle 27 wird von einem Hüllrohr 28 umgeben, das auf das Getriebegehäuse 19 aufgesteckt ist.

Zwischen dem Gehäuse 1 und dem Getriebegehäuse befindet sich ein Führungskreuz 29. Die Wirkungsweise dieses Führungskreuzes ist besonders deutlich aus Fig. 4 ersichtlich. Der obere Teil des Führungskreuzes 29 ist in einer in Längsrichtung verlaufenden Nut 19a im Getriebegehäuse 19 geführt. Der untere Teil des Führungskreuzes 29 ist in einer um 90° zur Nut 19a verlaufenden Nut 1a im Gehäuse 1 geführt. Das Getriebegehäuse 19 kann sich somit gegenüber dem Gehäuse 1 in Längs- und Querrichtung verschieben, aber nicht verdrehen.

Die Bohrvorrichtung funktioniert wie folgt.

Zunächst wird der Knopf 16 hineingedrückt und dadurch über das Kniehebelgelenk 14 die Klinke 12 mit der Verzahnung 2a in Eingriff gebracht. Die Führungshülse 2 wird dadurch blokkiert. Wird nun die Exzenterbüchse 4 über das Exzentergetriebe 20 bis 24 angetrieben, so erfolgt eine Relativverdrehung der Exzenterbüchse 4 gegenüber der Führungshülse 2. Dies ist in Fig. 3 dargestellt. Gelangt der Gewindestift 5 nun am Ende der Ringnut 4a zur Anlage, so will die Exzenterbüchse 4 die Führungshülse 2 mitdrehen. Um dies zu ermöglichen, muss zunächst in der geschilderten Weise die Klinke 12 mit der Verzahnung 2a ausser Eingriff gebracht werden. Bei der Relativverdrehung der Exzenterbüchse 4 gegenüber der Führungshülse 2 wird die Torsionsfeder 6 gespannt. Der Schneidkopf 9 gelangt dabei von der zentrischen in die exzentrische Lage und schafft sich einen Einstich im Untergrundmaterial. Wird nun die durch die Klinke 12 gebildete Sperre gelöst, so werden die Führungshülse 2 und die Exzenterbüchse 4 miteinander verdreht. Der Schneidkopf 9 schafft sich dabei auf 360° einen Hinterschnitt. Nachdem der Hinterschnitt vollständig geschaffen ist, fällt der Widerstand ab und die Torsionsfeder 6 kann die Führungshülse 2 und die Exzenterbüchse 4 wieder relativ zueinander verdrehen. Der Schneidkopf 9 gelangt dabei wiederum in seine zentrische Lage.

**Patentansprüche**

1. Bohrvorrichtung zum Erstellen hinterschnittener Bohrungen in einem Untergrund, mit einem sich auf dem Untergrund abstützenden Gehäuse (1), in welchem eine mit einer exzentrisch angeordneten, achsparallel verlaufenden Bohrung versehene Führungshülse (2) angeordnet ist, mit einer in der Bohrung um einen Winkel von etwa 180° begrenzt drehbar gelagerten Exzenterbüchse und einer in der Exzenterbüchse (4) drehbar gelagerten Antriebswelle (8) mit einem Schneidkopf (9), **dadurch gekennzeichnet**, dass die Führungshülse (2) im Gehäuse drehbar angeordnet ist, wobei zwischen der Führungshülse (2) und der über ein Untersetzungsgetriebe mit der Antriebswelle (8) verbundenen Exzenterbüchse (4) eine bei gegenseitiger Relativverdrehung von Führungshülse (2) und Exzenterbüchse (4) spannbare Torsionsfeder (6) angeordnet ist, die sich bei exzentrischer Stellung der Antriebswelle (8) in gespanntem Zustand befindet und dass zwischen Führungshülse (2) und Gehäuse (1) eine lösbare Einrichtung zur Dreharretierung vorgesehen ist.

2. Bohrvorrichtung nach Anspruch 1, dadurch gekennzeichnet, dass die Einrichtung zur Dreharretierung eine mit Angriffsnocken der Führungshülse (2) zusammenwirkende Klinke (12) aufweist.

3. Bohrvorrichtung nach Anspruch 2, dadurch gekennzeichnet, dass die Angriffsnocken (2a) sägezahnförmig ausgebildet sind.

4. Bohrvorrichtung nach Anspruch 2 oder 3, dadurch gekennzeichnet, dass die Klinke (12) an einem Kniehebelgelenk (14) abgestützt ist.

5. Bohrvorrichtung nach Anspruch 4, dadurch gekennzeichnet, dass das Untersetzungsgetriebe als Exzentergetriebe ausgebildet ist.

6. Bohrvorrichtung nach Anspruch 5, dadurch gekennzeichnet, dass der Steg des Exzentergetriebes mit der Antriebswelle (8) verbunden ist.

7. Bohrvorrichtung nach Anspruch 5 oder 6, dadurch gekennzeichnet, dass das Untersetzungsgetriebe ein Getriebegehäuse (19) aufweist, das mit dem Gehäuse (1) über ein Führungskreuz (29) drehfest und in einer senkrecht zur Antriebswelle (8) verlaufenden Ebene verschiebbar verbunden ist.

**Claims**

1. Drilling device for production of undercut bores in a subsurface, comprising a housing (1), which is supported on the subsurface and in which is arranged a guide sleeve (2) having an eccentrically arranged, axis-parallel bore, an eccenter bushing, which is mounted in the bore to be of limited rotatability around an angle of approximately 180°, and a driveshaft (8) with cutter head (9) rotatably mounted in the eccenter bushing (4), **characterised in that** the guide sleeve (2) is rotatably mounted in the housing, whereby a torsion spring (6), which is tensioned during opposite relative turning of guide sleeve (2) and eccenter bushing (4), is arranged between the guide sleeve (2) and the excenter bushing (4) which is connected to the driveshaft (8) via a reduction gearing, which torsion spring is tensioned with eccentric positioning of the driveshaft (8), and that a releasable device for rotary arrest is provided between guide sleeve (2) and housing (1).

2. Drilling device according to claim 1, **characterised in that** the device for rotary arrest comprises a ratchet (12) which cooperates with engaging cams of the guide sleeve (2)

3. Drilling device according to claim 2, **characterised in that** the engaging cams (2a) are shaped like saw-teeth.

4. Drilling device according to claim 2 or 3, **characterised in that** the ratchet (12) is supported against a toggle hinge (14).

5. Drilling device according to claim 4, **character-**

**ised in that** the reduction gearing is arranged as an eccenter gearing.

6. Drilling device according to claim 5, **characterised in that** the web of the eccenter gearing is connected to the driveshaft (8).

7. Drilling device according to claim 5 or 6, **characterised in that** the reduction gearing comprises a gearing housing (19), which is connected to the housing (1) via a guide cross (29) to be non-rotational and displaceable in a plane perpendicular to the driveshaft (8).

**Revendications**

1. Dispositif de perçage pour la réalisation de trous dans un matériau de réception, comprenant un carter (1) qui s'appuie sur le matériau de réception et dans lequel est disposée une douille de guidage (2) munie d'un alésage excentré et orienté parallèlement à l'axe, un coussinet d'excentrique monté dans l'alésage de manière à pouvoir tourner d'un angle limité d'environ 180°, et un arbre moteur (8) avec une tête de coupe (9), monté de manière tournante dans le coussinet d'excentrique (4), **caractérisé en ce** que la douille de guidage (2) est disposée de manière tournante dans le carter, entre la douille de guidage (2) et le coussinet d'excentrique (4) couplé avec l'arbre moteur (8) par l'intermédiaire d'un démultiplicateur, étant monté un ressort de torsion (6) qui peut être tendu lors d'une rotation relative de la douille de guidage (2) et du coussinet d'excentrique (4) et se trouve à l'état tendu lorsque l'arbre moteur (8) se situe dans la position excentrée, et qu'un dispositif amovible pour le blocage en rotation est prévu entre la douille de guidage (2) et le carter (1).

2. Dispositif de perçage selon la revendication 1, caractérisé en ce que le dispositif pour le blocage en rotation comprend un cliquet (12) qui coopère avec des mentonnets d'attaque de la douille de guidage (2).

3. Dispositif de perçage selon la revendication 2, caractérisé en ce que les mentonnets d'attaque (2a) sont conformés en dents de scie.

4. Dispositif de perçage selon l'une des revendications 2 ou 3, caractérisé en ce que le cliquet (12) prend appui sur une articulation à genouillère (14).

5. Dispositif de perçage selon la revendication 4, caractérisé en ce que le démultiplicateur est conformé en mécanisme à excentrique.

6. Dispositif de perçage selon la revendication 5, caractérisé en ce que la barrette du mécanisme à excentrique est couplée avec l'arbre moteur (8).

7. Dispositif de perçage selon l'une des revendications 5 ou 6, caractérisé en ce que le démultiplicateur comprend une boîte d'engrenages (19) qui est couplée de manière rigide en rotation avec le carter (1) par l'intermédiaire d'une croix de guidage (29) et de manière déplaçable dans un plan perpendiculaire à l'arbre moteur (8).

**Fig. 1**

Fig. 2

Fig. 3

Fig. 4